# EUROPEAN PATENT APPLICATION

(11) **EP 2 651 053 A1**
(43) Date of publication of application: **16.10.2013**
(21) Application number: 12163632.8
(22) Date of filing: 10.04.2012
(51) Int. Cl.: H04H 60/39

(54) **Media player including radio tuner**

(71) Applicant: Harman Becker Automotive Systems GmbH, 76307 Karlsbad (DE)
(72) Inventor: Kalbus, Peter, 76135 Karlsruhe (DE); Dittes, Tobias, 76646 Bruchsal (DE); Engel, Dirk, Dr., 76137 Karlsruhe (DE)
(74) Representative: Patentanwälte Westphal, Mussgnug & Partner

(57) **Abstract**

A media player device including a tuner for receiving audio or television broadcast signals (or both) is described herein. In accordance with one aspect of the present invention the media player device comprises a data storage unit which includes a file system. The file system includes a plurality of files, each of which represents a broadcast frequency. The media player device further includes a user interface, a tuner which is tunable to a selectable broadcast frequency, and a controller unit that is coupled to the tuner as well as to the file system and the user interface to enable a user to select a file. The controller unit is configured to tune the tuner to a broadcast frequency corresponding to a selected one of the files.

## Description

### Technical Field

The present invention relates to the field of media player devices which include radio tuners for receiving radio and television broadcast signals such as FM tuners, AM tuners DAB tuners, DMB tuners, UHF/VHF tuners, DVB tuners, ATSC tuners, ISDB tuners and the like.

### Background

Media player devices are consumer electronic devices which are capable of storing and reproducing digital media content such as audio data, image data, video data, digital documents, etc. The data is typically stored on a hard drive, a digital versatile disc (DVD), solid state memory devices or the like. Particularly portable media player devices are often referred to as "MP3 players" although modern devices support a large number of digital formats such as MPEG-2 Audio Layer III (MP3), Advanced Audio Coding (AAC) for coding audio data and H.264 (AVC), and MPEG-4 Part 2 (MPEG-4 Visual) for coding video data. However, the above is not a complete list of formats as a huge number of audio and video compression standards and container formats exist in the field.

As mentioned above, most media player devices use non-volatile memory (nowadays usually solid state disks) for storing the media files, wherein the data is usually hierarchically structured using a file system supporting a directory structure. Common disk file systems are, e.g., FAT/FAT32 (File Allocation Table), exFAT (extended File Allocation Table), HFS/HFS+ (Hierarchical File System), ext2/ext3/ext4 (second/third/fourth extended file system), etc. Further, a media player is often equipped with a user interface (including, e.g. a display, buttons, scroll wheels, a touch screen or the like) which enables a user to browse the file system and to choose a file or a whole directory whose content he/she would like to have reproduced by the media player.

Some media player devices, particularly media player devices used in automobiles, are additionally equipped with a tuner for receiving radio (i.e. audio and television) broadcast signals. In order to listen to a radio program or watch a TV program the media player activates the tuner and the user can "tune" the receiver (i.e. the tuner) to the desired frequency within one or more defined frequency bands (e.g. FM, AM (short wave, medium wave, and long wave bands), UHF band, etc.). When activating the radio tuner, the user interface of the media player typically switches to a specific "tuner mode" as the usual handling of a tuner (e.g., choosing a desired broadcast station, scanning a selected frequency band for broadcast stations, selecting preset frequencies stored in a memory, etc) is different from the usual handling of, e.g., a modern MP3 player and thus the respective user interfaces are designed differently.

There is a need for a media player device including a radio (audio and/or television) tuner which provides an improved usability and allows an easy and comfortable handling.

### Summary of the Invention

A media player device including a tuner for receiving audio or television broadcast signals (or both) is described herein. In accordance with one aspect of the present invention the media player device comprises a data storage unit which includes a file system. The file system includes a plurality of files, each of which represents a broadcast frequency. The media player device further includes a user interface, a tuner which is tunable to a selectable broadcast frequency, and a controller unit that is coupled to the tuner as well as to the file system and the user interface to enable a user to select a file. The controller unit is configured to tune the tuner to a broadcast frequency corresponding to a selected one of the files.

### Brief description of the Drawings

The invention can be better understood with reference to the following drawings and description. The components in the figures are not necessarily to scale, instead emphasis is placed upon illustrating the principles of the invention. Moreover, in the figures, like reference numerals designate corresponding parts. In the drawings:

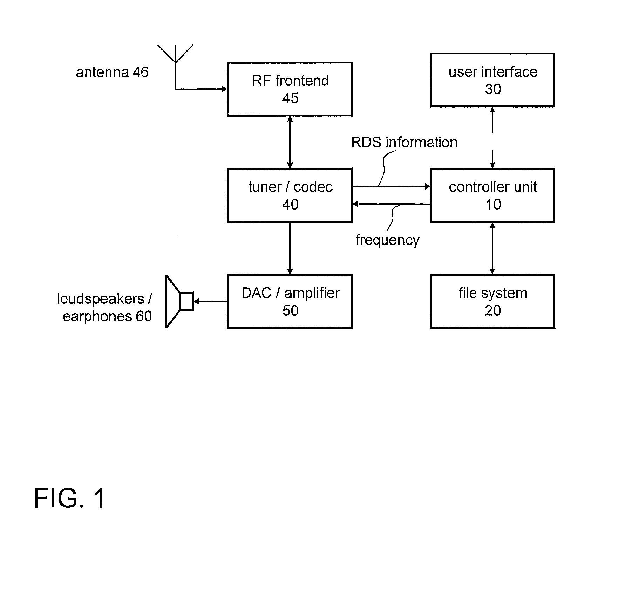

FIG. 1 illustrates in a block diagram the basic structure of a media player including a tuner for receiving audio and television broadcast signals; and
FIG. 2 illustrates a hierarchically structured file system and some exemplary content in accordance with one example of the invention.

### Detailed Description

FIG: 1 illustrates in a block diagram that illustrates the structure of a media player device in accordance with one exemplary embodiment of the invention. The media player device includes a controller unit 10, a user interface 30, a storage unit including a file system 20 as well as a tuner and decoder unit 40. The controller unit 10 is configured to control the function of the tuner and decoder unit 40. Further, the controller unit 10 controls the data flow between the file system 20, the tuner and decoder unit 40 and the user interface 30. For demodulating and/or decoding broadcast signals the tuner and decoder unit 40 is coupled with (or includes) an RF front end 45 that receives broadcast signals via an antenna 46. The tuner and decoder unit 40 is further coupled to an amplifier 50 which is configured to amplify the audio signal(s) provided by the tuner and decoder unit 40. The amplified signals are then reproduced via the loudspeakers (or earphones) 60.

The tuner and decoder unit 40 is configured to demodulate the received broadcast signals and optionally - in case of digital broadcast - to decode the digitally coded (e.g. using an AAC codec) audio data. Further, the tuner and decoder unit 40 can also decode digitally coded audio data originating from media files stored in the file system 20. In the latter case (i.e. when reproducing stored audio data) the RF front end and the tuner are idle, i.e. switched to standby mode. The user interface 30 allows the user to browse the file system and to select a desired media file (containing, e.g. coded audio data in accordance with the AAC standard) which he/she would like to listen to. User interfaces which are configured to provide this task are sufficiently known in the field and not further described herein.

In order to "seamlessly" integrate the media player function (i.e. reproducing stored media data) and the tuner function (i.e. reproducing broadcast signals received "over the air") the file system includes not only files containing digitally coded media (audio, video, images, documents, etc.) data but also files which represent a broadcast frequency, i.e. a radio or a television broadcast channel. When the user selects such a file via the user interface 30, the controller unit tunes the tuner to a frequency corresponding to the broadcast frequency associated with the selected file. The frequency information may be included in the file name or in the (meta-) data contained in the filed. Further metadata may be included in these files such as, for example, information about the radio station, provided via the Radio Data System (RDS) communication protocol or other comparable services. This information is provided by the tuner and decoder unit 40 and may be stored in the respective file and/or provided to the user via the user interface 30 (e.g. via a display).

The file system 30 may include one "station file" for each single frequency the tuner can be tuned to, regardless of whether a broadcast station which broadcasts over that frequency actually exists. The station files may be grouped into different directories, whereby different directories may represent different frequency bands. One directory may, for example, be provided for the FM band and include station files representing the broadcast frequencies from 87.5 MHz to 108.0 MHz in steps of, e.g., 0.5 MHz. Another directory may be provided, e.g., for the terrestrial DAB (digital audio broadcast) and include station files representing the broadcast frequencies (or DAB frequency blocks) in the VHF-III band (174 MHz - 230 MHz, frequency blocks 5A - 12D). Similarly, separate directories may be provided for frequencies used for AM broadcast, for DVB-T video broadcast, etc.

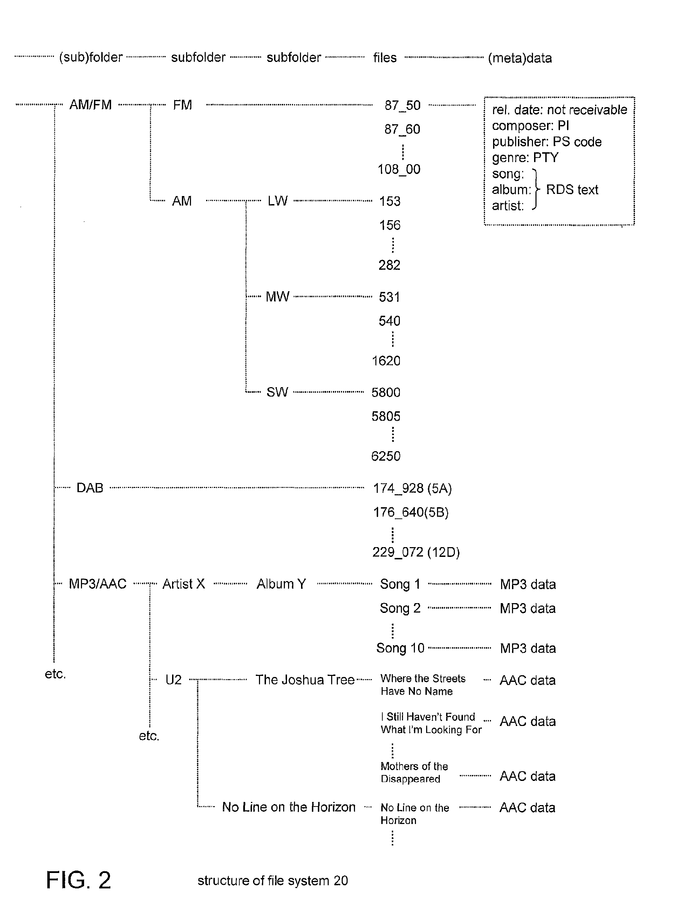

One exemplary file system (tree-) structure is illustrated in FIG. 2. Each file (station file) represents a specific broadcast frequency (center frequency) or, in other words, a specific frequency block of a frequency band. For example, the file "87_60" represents the broadcast frequency of 87.6 MHz in the FM band (i.e. the VHF-Band II). Similarly, the file "176_640" represents the broadcast frequency of 176.64 MHz, which is the center frequency of DAB frequency block 5B in the VHF Band III. Further, the file "5805" represents the broadcast frequency of 5805 kHz in the short wave (SW) band in the AM segment. As mentioned above, some files (media files) may contain coded (e.g. in accordance with the MP3 or AAC standard) audio data such as the files "Song 1" or "No line on the Horizon".

As illustrated in FIG. 2, the station files may be grouped into directories to form a hierarchical structure which enables the user to easily browse through the file system. For example, the files representing the broadcast frequencies (87.5 MHz to 108 MHz) in the FM band may be located in a directory named, e.g., "FM". Similarly, the files representing the broadcast frequencies (174 MHz to 230 MHz) in the VHF Band III (used for T-DAB) may be located in a directory named DAB. The station files representing the broadcast frequencies I the short wave (SW), the medium wave (MW), and the long wave (LW) bands (5800 kHz to 6250 kHz, 531 kHz to 1620 kHz, and 153 kHz to 282 kHz, respectively) may be grouped in the directories names "SW", "MW", and "LW", respectively. As these three frequency bands belong to the AM broadcast segment, the (sub-) directories "SW", "MW", and "LW" may, again, be grouped into one parent directory named "AM". In the directory structure illustrated in FIG. 2. the directories "FM" and "AM" are grouped together into one parent directory named "AM/FM" as all the station files included in this branch of the directory tree represent analog radio broadcast, whereas the digital radio broadcast station files are included in the directory "DAB", which is in the same level in the directory structure as the "AM/FM" directory. FIG. 2 also illustrates the metadata which may be included in the station files. In the present example the metadata essentially includes service information provided by the Radio Data System, such as the PI (Program Information), the PS (Program Service), the PTY (Program Type) code and the Radio Text (RT) associated with the respective radio station.

A further directory is named "MP3/AAC" in the present example. This branch of the directory tree contains media files such as MP3 or AAC coded music data. As illustrated in FIG. 2 these media files may also be grouped into different sub-directories. For example, the files which belong to the same Album are located in the same directory, which may be named after the album name. Several directories which represent different albums of the same artist may be grouped in one parent directory named after the artist. As becomes apparent from FIG. 2, structuring the broadcast frequencies in directories of a hierarchic file system allows to seamlessly merge media (coded audio, image or video) data and broadcast stations into a uniform file system structure, thus facilitating an easy use of the media player including a tuner. It should be noted that the actual hierarchy of the directories shown in FIG. 2 is just an example and the files may be grouped differently according to any other criteria.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those where not explicitly been mentioned. Further, the methods of the invention may be achieved in either all software implementations, using the appropriate processor instructions, or in hybrid implementations that utilize a combination of hardware logic and software logic to achieve the same results. Such modifications to the inventive concept are intended to be covered by the appended claims.

## Claims

1. A media player device including a tuner for receiving audio or television broadcast signals, the device comprises:
a data storage unit including a file system, the file system including a plurality of files, each of which represents a broadcast frequency;
a user interface;
a tuner unit which is tunable to a selectable broadcast frequency;
a controller unit coupled to the tuner as well as to the file system and the user interface to enable a user to select a file;
wherein the controller unit is configured to tune the tuner to a broadcast frequency corresponding to a selected one of the files.

2. The media player device of claim 1, wherein the file system includes two or more directories which represent at least one frequency band, each of these directories including files which represent the broadcast frequency available in the respective frequency band(s).

3. The media player device of claim 2, wherein the file system includes at least one of the following:
a directory including files representing frequencies of the FM broadcast frequency band;
a directory including files representing frequencies of the AM broadcast frequency band(s);
a directory including files representing frequencies of the DAB broadcast frequency band(s);
a directory including files representing frequencies of the DVB-T broadcast frequency band(s);
a directory including files representing frequencies of the DMB broadcast frequency band(s);
a directory including files representing frequencies of the UHF or VHF broadcast frequency band(s);
a directory including files representing frequencies of the ATSC broadcast frequency band(s); and
a directory including files representing frequencies of the ISDB broadcast frequency band(s).

4. The media player device of one of the claims 1 to 3, wherein the file system includes a directory including files containing coded audio and/or video data, the media player device further comprising:
a codec unit configured to decode coded audio and/or video data, wherein the controller unit is configured to supply the coded data contained in a selected one of the files to the codec unit.

5. The media player device of one of the claims 1 to 5 further comprising a codec unit configured to decode coded audio and/or video data, wherein the controller unit is configured to supply coded data received by the tuner from a digital broadcast station to the codec unit.

6. The media player of one of the claims 1 to 5, wherein the tuner unit is configured to receive service information additionally transmitted with the received radio signal and to provide this information to the controller unit to store this information as metadata in the file representing the broadcast frequency of the received radio signal.

7. The media player of one of the claims 1 to 6, wherein the user interface includes at least one of the following: a button, a scroll wheel, and a touch screen, to enable a user to browse the file system and to choose a file or a whole directory whose content he/she would like to have reproduced by the media player.

8. The media player of one of the claims 7, wherein the user interface further includes a display.

9. The media player of one of the claims 1 to 9, wherein the tuner comprises an RF front end for receiving RF broadcast signals.

10. The media player of one of the claims 4 and 5 wherein the codec unit is configured to decode at least one of the following:
digital audio data coded in accordance with the MPEG-2 Audio Layer III (MP3) standard;
digital audio data coded in accordance with the Advanced Audio Coding (AAC) standard;
digital video data coded in accordance with the H.264 (AVC) standard; and
digital video data coded in accordance with the MPEG-4 Part 2 (MPEG-4 Visual) standard.
